# EUROPEAN PATENT APPLICATION

(11) **EP 2 921 419 A1**
(43) Date of publication of application: **23.09.2015**
(21) Application number: 15159192.2
(22) Date of filing: 16.03.2015
(51) Int. Cl.: B65D 39/00

(54) **Cork stopper with resin coating layer**

(30) Priority: 19.03.2014 JP 2014055767
(71) Applicant: Uchiyama Manufacturing Corp., Okayama-shi Okayama 702-8004 (JP); Suntory Holdings Limited, Kita-ku, Osaka-shi Osaka 530-8203 (JP)
(72) Inventor: Anabuki, Akihiro, Okayama, 701-2221 (JP); Katayama, Tatsuo, Okayama, 701-2221 (JP); Yamamoto, Tomohisa, Okayama, 701-2221 (JP); Kado, Tatsuki, Tokyo, 135-0091 (JP); Konishi, Shinpei, Tokyo, 135-0091 (JP)
(74) Representative: Sajda, Wolf E.

(57) **Abstract**

A cork stopper (1) with a resin coating layer, having a columnar cork stopper body (2) constituted with a molded cork body, and a resin coating layer (3) covering an outer surface of the cork stopper body (2). The resin coating layer (3) has a resin adhesion layer (30) directly adhered onto the outer surface of the cork stopper body (2), and a resin layer (31) adhered onto the outer surface of the cork stopper body (2) with the resin adhesion layer interposed therebetween, and the resin coating layer (3) on a circumferential face of the cork stopper body (2) has a layer thickness from 100 µm to 240 µm.

## Description

### Technical Field

The present invention relates to a cork stopper with a resin coating layer for plugging the mouth portion of a container for beverages like whisky, brandy or wine.

### Background Art

A cork stopper coated with a resin layer, of which the outer surface of the cork stopper body is coated with resin, is widely used as a cork stopper for plugging the mouth portion of a container for beverages like whisky, brandy or wine, referring to Patent Literatures 1 to 4. The cork stopper body of the cork stopper coated with the resin layer is formed in a columnar shape by compression molding cork granules and binder resin, or formed in the shape of a plug by boring natural cork bark.

A resin coating layer of is provided for preventing corky smell from diffusing into the beverage in the container, preventing cork dust from falling into the container, preventing color change on the cork surface caused by invasion of the beverage into a cork layer, and the like.

Patent Literatures 1 and 2 disclose that a cork stopper coated with a resin layer, wherein a coating layer of synthetic resin of 50 µm to 200 µm in thickness, for example, polyethylene, polypropylene or polyester, is formed on an outer surface of a cork stopper body, namely a stopper body including cork material.

Patent Literature 3 discloses an adhesion layer adhered onto the outer surface of a cork stopper body, namely the insertion portion made of cork material and a cork stopper coated with a synthetic resin layer formed by adhering an outer layer made of polyethylene terephthalate resin onto an inner layer, the inner layer being made of polyethylene resin adhered onto the adhesion layer.

Patent Literature 4 discloses a plug for a container, i.e. a cork stopper, coated with a synthetic resin layer formed by adhering a synthetic resin layer made of polyester resin or mainly made of polyester resin on a liquid contact face or an outer circumference continuously formed with the liquid-contact face of the core, i.e. a cork stopper body, constituted with an elastic body, i.e. cork, via a polyethylene resin adhesion layer.

### List of Citations

### Patent Literature

| | |
|---|---|
| PTL 1 | JP 2003-112 114 A |
| PTL 2 | JP 2003-117 991 A |
| PTL 3 | JP 2008-074 448 A |
| PTL 4 | WO 2004/020300 A |

### Summary of the Invention

### Technical Problem

The above-mentioned cork stopper coated with the resin layer is preferably used for a container for beverages like whisky, brandy or wine, because the resin coating layer has the above-mentioned functions. On the other hand, it is pointed out that the resin coating layer sometimes generates wrinkles due to abrasion against the mouth portion of the container at the time of plugging the mouth portion of the container and the sealing ability is deteriorated, so that improvement is required.

Patent Literatures 1 and 2 do not disclose prevention of wrinkles on the resin coating layer. Patent Literature 3 discloses that the outer layer made of polyethylene terephthalate resin is adhered without wrinkles onto all over the inner layer adhered onto the insertion portion so that the liquid in the container does not directly contact the polyethylene resin constituting the inner layer. However, Patent Literature 3 does not mention wrinkles generated on the inner layer directly adhered onto the outer surface of the cork stopper body, specifically onto the inner layer of the circumferential face of the cork stopper body, at the time of plugging the mouth portion.

In addition, Patent Literature 4, which was filed by the applicants of the present invention, discloses that wrinkles on the coating layer are prevented even when the core is constricted at the time of plugging the mouth portion of the container because the core made of cork and the synthetic resin layer coated on the outer surface of the core are integrated with the adhesion layer interposed.

However, in the examination by the inventors of the present invention, wrinkles are easily generated at the time of plugging the mouth portion when the thickness of the resin coating layer, i.e. layer thickness, becomes thin, thereby requiring attentive production control.

The present invention is proposed in view of the above-mentioned problems and has an object to provide a cork stopper with a resin coating layer capable of accurately preventing wrinkles on the resin coating layer at the time of plugging the mouth portion of the container while keeping the unique sealing ability and the special texture of the cork stopper.

### Solution to the Problem

A cork stopper with a resin coating layer of an embodiment of the present invention has a columnar cork stopper body constituted with a molded cork body and a resin coating layer covering an outer surface of the cork stopper body. The resin coating layer has a resin adhesion layer directly adhered onto the outer surface of the cork stopper body and a resin layer adhered onto the outer surface of the cork stopper body with the resin adhesion layer interposed therebetween. The resin coating layer on a circumferential face of the cork stopper body has a layer thickness from 100 µm to 240 µm.

In the above-mentioned cork stopper with the resin coating layer, the resin coating layer comprises the resin adhesion layer and the resin layer, so that the coating resin layer is firmly integrated with the cork stopper body by the resin adhesion layer. The layer thickness of the resin coating layer on the circumferential face of the cork stopper body is from 100 µm to 240 µm, thereby the resin coating layer is unlikely to generate wrinkles when the cork stopper with the resin coating layer is plugged into the mouth portion of the container.

If the layer thickness of the resin coating layer of the side circumferential face is less than 100 µm, the resin coating layer easily generates wrinkles at the time of plugging, thereby the sealing ability is likely to be deteriorated by the wrinkles. If the layer thickness of the resin coating layer of the side circumferential face exceeds 240 µm, the resin coating layer is unlikely to generate wrinkles. However, the cork stress is damaged by the resin coating layer, the conformability of cork to the mouth portion of the container, which is unique characteristic of cork, is reduced and the unique sealing ability of cork is unlikely to be achieved.

Specifically, the diameters of the mouth portions of the containers made of glass are different in length. The cork stopper corresponds to the different diameters respectively because of the conformability of cork and achieves the sealing ability; however, if the layer thickness of the resin coating layer of the side circumferential face exceeds 240 µm, the conformability is likely to be interrupted. In addition, the resin coating layer is adversely influenced in transparency and the special texture of cork on the appearance is damaged, thereby reducing the commodity value of the cork stopper.

In the cork stopper with the resin coating layer of an embodiment of the present invention, the molded cork body can be formed by compression molding cork granules and binder resin, and an average grain diameter of the cork granules can be from 0.5 mm to 3 mm.

In the above-mentioned cork stopper with the resin coating layer, the cork granules are bound to each other by binder resin and are molded under compression, thus the cork molded body is produced. The shape of the cork molded body is stabilized and the accumulated cork granules achieve unique elasticity. Therefore, the cork molded body is suitably plugged into or unplugged from the mouth portion of the container for beverages like whisky or brandy.

The cork stopper body contains binder resin, so that the resin coating layer is firmly integrated with the cork stopper body by the resin adhesion layer. When the average grain diameter of the cork granules is from 0.5 mm to 3 mm and in addition, the layer thickness of the rein coating layer is from 100 µm to 240 µm, wrinkles of the resin coating layer at the time of plugging are effectively inhibited. If the average grain diameter of the cork granules is less than 0.5 mm, the unique elasticity to the accumulated body of cork granules is likely to be deteriorated.

If the average grain diameter of the cork granules exceeds 3 mm, wrinkles are not inhibited. When the average grain diameter of the cork granules is from 0.5 mm to 1 mm, even if the cork is compressed at the time of plugging, the resin coating layer is also uniformly compressed and wrinkles on the surface are invisibly scattered, thereby accurately preventing wrinkles by the synergetic effect with the above-specified range of the layer thickness of the resin coating layer.

Specifically, if the layer thickness of the resin coating layer is out of the above-mentioned range, wrinkle preventing effect on the resin coating layer is improved compared with the conventional embodiment when the average grain diameter of the cork granule is from 0.5 mm to 1 mm.

In the cork stopper with the resin coating layer of an embodiment of the present invention, the resin adhesion layer can be a polyethylene resin adhesion layer and the resin layer can be a polyethylene resin film layer.

In the above-mentioned embodiment, both the resin adhesion layer and the resin layer constituting the resin coating layer are made of polyethylene resin, thereby the resin coating layer is accurately adhered to and integrated with the cork stopper body.

In the cork stopper with the resin coating layer of an embodiment of the present invention, the outer surface of the resin coating layer can be further coated with a polyethylene terephthalate resin layer.

In the above-mentioned embodiment, the outer surface of the resin coating layer is further coated with the polyethylene terephthalate resin with high barrier property, thereby preventing diffusion of corky smell into a beverage liquid in the container. Polyethylene terephthalate is harmless and hygienic, thereby increasing the applicability to the cork stopper for beverages.

### Advantageous Effects of the Invention

The present invention provides a cork stopper with a resin coating layer capable of preventing wrinkles on the resin coating layer at the time of plugging the mouth portion of the container while keeping the unique sealing ability and the special texture of the cork stopper.

### Brief Description of the Drawings

- FIG. 1: is a diagram of a longitudinal section showing one embodiment of a cork stopper with a resin coating layer of an embodiment of the present invention.
- FIG. 2: is a diagram of a longitudinal section showing another embodiment of a cork stopper with a resin coating layer of the present invention.
- FIG. 3: is a table showing the test results of wrinkles at the time of plugging the mouth portion of the container when the layer thickness of the resin coating layer varies.

### Description of Embodiments

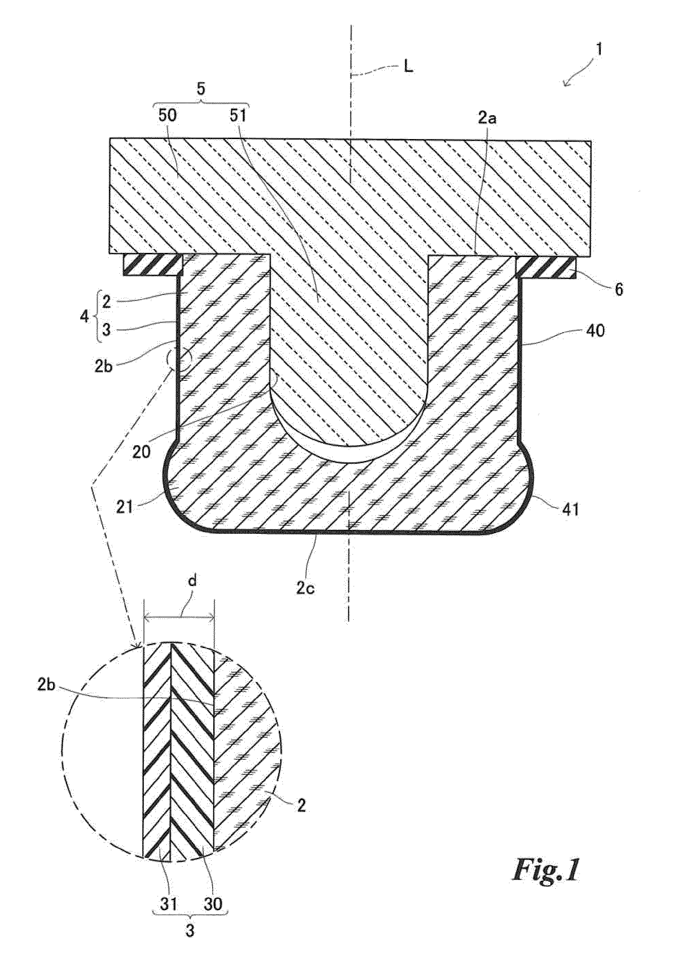

The embodiments of the present invention are explained referring to the attached drawings. FIG. 1 is a diagram of a longitudinal section showing one embodiment of a cork stopper with a resin coating layer of an embodiment of the present invention. A cork stopper 1 with a resin coating layer in the figure comprises a columnar cork stopper body 2 formed by compression molding of cork granules and binder resin, i.e. a resin adhesive agent; a resin coating layer 3 coated on an outer surface of the cork stopper body 2 from an upper end 2a side along a circumferential face 2b and an lower end face 2c in the direction of an axis L; and a flange portion 5 integrated with the upper end portion 2a of the cork stopper body 2.

The cork stopper body 2 and the resin coating layer 3 constitute a core portion 4. Cork granules are obtained by crushing and granulating natural cork bulk. The average grain diameter of the cork granules is from 0.5 mm to 3 mm, preferably from 0.5 mm to 1 mm. The cork stopper body 2 is a columnar body formed by molding under compression in the centripetal direction and has an attachment hole 20 for attaching the flange portion 5 formed from the upper end portion 2a side to the lower end face 2c side along the direction of the axis L.

The cork stopper body 2 in the figure has a large-diameter portion 21 of which outer diameter is larger than those of other portions of the cork stopper body 2, the large-diameter portion 21 being at a lower portion continuously formed from the lower end face 2c. The outer shape of the core portion 4 comprises a columnar portion 40 and an expanding portion 41 continuously formed under the columnar portion 40 along the shape of the cork stopper body 2. The shape of the core portion 4, i.e. the cork stopper body 2, can be a straight columnar body without the expanding portion 41, i.e. the large-diameter portion 21.

The flange portion 5 is made of glass and comprises a disk-like flange body 50 and a columnar projecting portion 51 projecting downward from the center of the flange body 50. The projecting portion 51 is pressed into the attachment hole 20 of the cork stopper body 2 in such a manner that the lower face of the flange body 50 abuts the upper face of the cork stopper body 2.

The abutting face and the pressed face are coated with an adhesive agent, and the cork stopper body 2 and the flange portion 5 are integrally fixed. A washer 6 made of polyethylene is fitted around the upper outer circumference of the cork stopper body 2 so as to contact the lower face of the flange portion 50.

The washer 6 is provided between an upper open edge portion, not shown, of the mouth portion and the lower face of the flange portion 50 when the cork stopper 1 coated with the resin layer is plugged by pressing the core portion 4 into the mouth portion of the container for whisky, not shown. The washer 6 prevents direct abutment of the open edge portion and the lower face of the flange body 50. The container made of glass does not contact the flange portion 5 made of glass and a consumer is able to plug the mouth portion without causing unpleasantness.

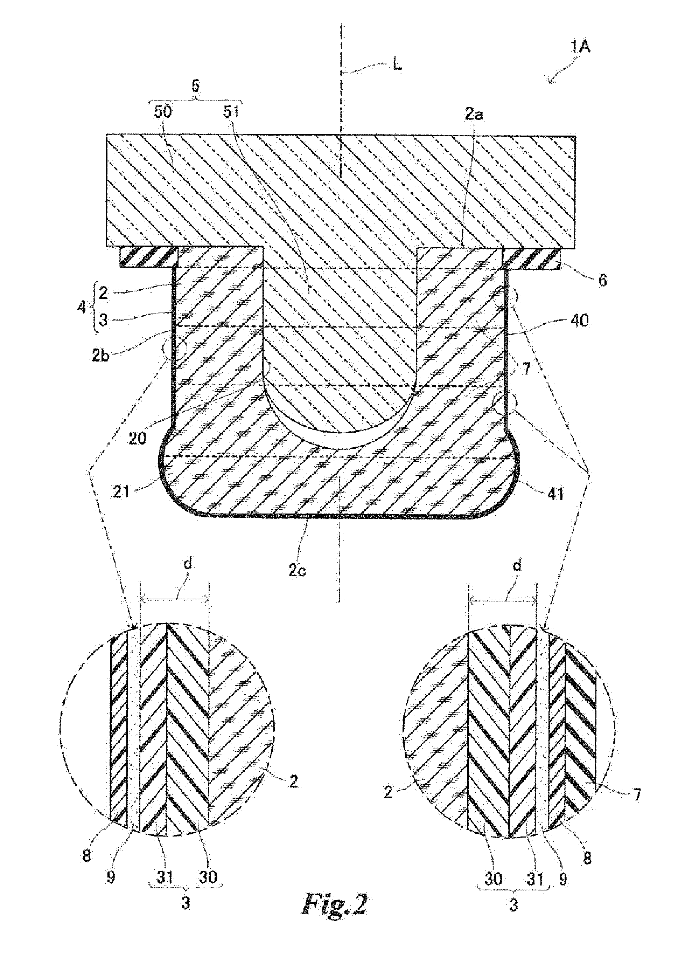

In the explanation referring to FIG. 1 and FIG. 2, the upper end portion 2a side is the upper side and the lower end face 2c side is the lower side. The flange portion 5 is made of glass in the above-mentioned embodiment; however, the flange portion 5 can be made of hard resin or metal.

The resin coating layer 3 comprises a resin adhesion layer 30 directly adhered onto the outer surface of the cork stopper body 2 and a resin layer 31 coated on the outer surface of the cork stopper body 2 with the resin adhesion layer 30 interposed. One desirable example of a combination of the resin adhesion layer 30 and the resin layer 31 constituting the resin coating layer 3 is a combination of a polyethylene resin adhesion layer and a polyethylene resin film layer.

The present invention is not limited to such a combination and a combination of a polyester resin adhesion layer and a polyester resin film layer can be employed. In addition, other combinations are possible such as a combination of polyethylene resin adhesion layer and a polyester resin film layer, a combination of a polyester resin adhesion layer and a polyethylene resin film layer, a combination of another resin adhesion layer and another resin film layer, or the like.

The layer thickness "d" of the resin coating layer 3 is from 100 µm to 240 µm, preferably from 120 µm to 200 µm. The resin coating layer 3 is integrally coated on the outer surface of the cork stopper body 2 as mentioned below. Firstly, a polyethylene adhesion film and a polyethylene film which are overlapped are placed on a mold, not shown, having a cavity processed in conformity with the shape of the cork stopper body 2 with the polyethylene adhesion film placed upward.

Next, a molded cork stopper body 2 prepared in advance is pressed in the cavity of the mold together with the overlapped films from the lower end face 2c side, and the mold is heated to a predetermined temperature to melt the polyethylene adhesion film. When the polyethylene adhesion film is melted, the polyethylene adhesion film is heat-sealed on the polyethylene film and the outer surface of the cork stopper body 2.

Thus, the polyethylene film is integrally coated on the outer surface of the cork stopper body 2 with the polyethylene adhesion film interposed. The cork stopper body 2 is taken out of the mold after being cooled, and the core portion 4 is obtained in such a manner that an outer surface of the core portion 4, including the circumferential face 2b and the lower end face 2c of the cork stopper body 2, is coated with the resin coating layer 3.

The resin coating layer 3 comprises the resin adhesion layer 30 of a polyethylene adhesion film directly adhered onto the outer surface of the cork stopper body 2 and the resin layer 31 of a polyethylene film coated on the outer surface with the resin adhesion layer 30 interposed.

The thicknesses of the polyethylene adhesion film and the polyethylene film are selected in such a manner that the total thickness of the resin adhesion layer 30 and the resin layer 31, namely the layer thickness "d" of the resin coating layer 3, becomes from 100 µm to 240 µm. The total thickness of the resin adhesion layer 30 and the resin layer 31 can be from 100 µm to 240 µm regardless of the magnitude relation of the thickness of the resin layer 31 and the resin adhesion layer 30.

The forming method of the resin layer 31 includes a forming method in which resin powder is attached onto the outer surface of the cork stopper body 2 formed with the resin adhesion layer 30 and also is heat-melted, and a forming method by coating melted resin.

Then, the flange portion 5 is attached after the washer 6 is fitted at a predetermined position of the cork stopper body 2. The upper end face 2a, i.e. the upper end portion, of the cork stopper body 2 and the circumferential face of the projecting portion 51 of the flange portion 5 are applied with an adhesive agent, the projecting portion 51 is pressed into the attachment hole 20, and the adhesive agent is hardened, thereby the flange portion 5 is attached. Thus, the cork stopper 1 with the resin coating layer as shown in the figure is obtained.

The outer diameter of the columnar portion 40 of the core portion 4 of the cork stopper 1 with the resin coating layer is determined so as to have a tightening allowance of 1.5 mm relative to the inner diameter of the mouth portion of the container. The expanding portion 41 is formed by molding the cork stopper body 2 using a mold having a cavity in conformity with the shape of the cork stopper body 2 including the large-diameter portion 21. Or the expanding portion 41 can be formed as follows.

Using a mold with a cavity in the shape of a linear tube, the cork stopper body 2 is molded and the resin coating layer 3 is formed, then the expanding portion 41 is thermally expanded in the outer diametrical direction by heating the lower portion under the lower end portion of the attachment hole 20. The portion lower than the lower end portion of the attachment hole 20 is solid with accumulated cork granules, so that heat expansion works in the outer diametrical direction and the expanding portion 41 is formed as shown in the figure.

The cork stopper 1 with the resin coating layer as mentioned above is plugged into the mouth portion of the container for whisky, brandy or the like. The cork stopper 1 with the resin coating layer is pressed into the mouth portion of the container in such a manner that the expanding portion 41 of the core portion 4 is compressed in the centripetal direction and passes through the mouth portion, and the washer 6 abuts the open edge portion of the mouth portion, thereby the mouth portion is plugged with the cork stopper 1 with the resin coating layer.

In such a plugged condition, the columnar portion 40 of the core portion 4 is compressed in the centripetal direction by the length of the tightening allowance and elastically contacts the inner diametrical portion of the mouth portion. Thus, the mouth portion is sealed, the beverage in the container is prevented from leaking and outer air is prevented from entering the container.

The lower end face 2c of the cork stopper body 2 becomes a liquid-contact face, but the lower end face 2c, coated with the resin coating layer 3, does not contact the beverage, and corky smell is prevented from diffusing to the beverage in the container. In addition, cork dust is prevented from falling into the container and the cork surface is not colored by preventing invasion of the beverage into the cork layer. The cork stopper 1 with the resin coating layer is plugged into the mouth portion in such a manner that the expanding portion 41 passes through the mouth portion, so that the cork stopper 1 coated with the resin layer is unlikely to be popped up.

The layer thickness of the resin coating layer 3 is from 100 µm to 240 µm, thereby preventing wrinkles of the resin coating layer 3 at the time of plugging and preventing leakage of the beverage through the wrinkles when the container is inclined. In addition, in the embodiment of the present invention, the lower end face 2c of the cork stopper body 2 is coated with the thick resin coating layer 3, so that pinholes are not caused on the lower end face 2c and countermeasures for preventing the pinholes, which have been conventionally necessary, are not required. Thus, the production procedure of the cork stopper 1 with the resin coating layer is able to be simplified.

In the above-mentioned range of the layer thickness of the resin coating layer 3, the cork stress, namely elasticity, is not damaged, the conformable characteristic to the mouth portion of the container, which is unique characteristic of cork, is stabilized, and there is no fear that the seal ability changes due to non-uniform diameters of the mouth portions. In addition, the resin coating layer 3 is adversely influenced in transparency and special texture of a cork stopper is not damaged.

When the average grain diameter of the cork granules is from 0.5m to 3 mm, wrinkles are effectively prevented at the time of plugging coupled with the effect by the above-mentioned characteristic of the layer thickness range of the resin coating layer 3.

Specifically, when the average grain diameter of the cork granules is from 0.5m to 1 mm, even if the cork is compressed at the time of plugging, the resin coating layer 3 is uniformly compressed and the wrinkles on the surface are invisibly scattered, thereby accurately preventing wrinkles by the synergetic effect of the above-specified range of the layer thickness of the resin coating layer 3.

In the embodiment of the present invention, the resin coating layer 3 within the above-mentioned layer thickness range is integrally coated in substantially uniform thickness on the entire cork stopper body 2 including the circumferential face 2b and the lower end face 2c.

However, at least the layer thickness of the circumferential face 2b to which abrasion stress is loaded at the time of plugging is within the above-mentioned range. The lower end face 2c is the liquid-contact face, so that the layer thickness of the lower end face 2c can be determined separately so as to prevent the mutual effect of the beverage and the cork.

FIG. 2 shows another embodiment of a cork stopper with a resin coating layer of the present invention. A cork stopper 1A with a resin coating layer of the embodiment is formed by coating a polyethylene terephthalate resin film 8 on the outer surface of the resin coating layer 3 of the above-mentioned cork stopper 1 with the resin coating layer.

Specifically, the polyethylene terephthalate resin film 8 is integrally coated on the outer surface of the resin coating layer 3 with a urethane adhesion layer 9 interposed. The polyethylene terephthalate resin film 8 is formed in the following method.

For example, a urethane adhesive agent is applied on the outer surface of the cork stopper body 2, i.e. the core portion 4, coated with the resin coating layer 3. Then, a heated polyethylene terephthalate resin film is coated on the outer surface, is pressed in a mold, and is heat-sealed on the outer surface with the polyethylene terephthalate film stretched, thereby forming the polyethylene terephthalate resin film 8 of polyethylene terephthalate adhered all over the outer surface of the resin coating layer 3.

Polyethylene terephthalate is preferably used as resin for the polyethylene terephthalate resin film 8 when the container is used for beverages, because polyethylene terephthalate is superior in barrier performance and in preventing diffusion of corky smell into the beverage liquid in the container and is harmless and hygienic.

In the embodiment, two silicone elastomer layers 7 are provided. One silicone elastomer layer 7 is integrally coated on the upper portion and another on the lower portion of the circumferential face 2b such that the middle portion in the circumferential direction is not provided with such a silicone elastomer layer 7, the upper portion and the lower portion being on the circumferential face 2b of the outer surface of the polyethylene terephthalate resin film 8 and being spaced in the axial direction L.

The silicone elastomer layers 7 preferably include a resin lubricant such as a spherical silicone resin lubricant or a spherical polyethylene resin lubricant or an inorganic lubricant such as silica, clay or talc. The silicone elastomer layers 7 function to facilitate smooth plugging and unplugging of the cork stopper 1A with the resin coating layer into or from the mouth portion of the container and to prevent sound at the time of plugging and unplugging. Therefore, a consumer is able to pleasantly plug or unplug.

Also in the cork stopper 1A with the resin coating layer, the layer thickness "d" of the resin coating layer 3 is from 100 µm to 240 µm, thereby preventing wrinkles of the resin coating layer 3 at the time of plugging the mouth portion of the container and preventing leakage of the beverage through the wrinkles when the container is inclined.

In addition, the polyethylene terephthalate resin film 8 is integrally coated all over the outer surface of the resin coating layer 3 and the lower end face 2c of the cork stopper body 2 does not contact the beverage, thereby corky smell is prevented from diffusing into the beverage in the container.

In addition, cork dust is prevented from falling into the container and the cork surface is not colored by preventing beverage from invading the cork layer. The polyethylene terephthalate resin film 8 which is harmless, hygienic and superior in the barrier performance and in preventing corky smell from diffusing into the beverage liquid in the container, is provided on the liquid contact face, thereby increasing the applicability of the cork stopper to beverages.

Other structures, functions and effects are same as those of the cork stopper 1 with the resin coating layer, so the common members have the same reference numerals and the explanation is omitted here.

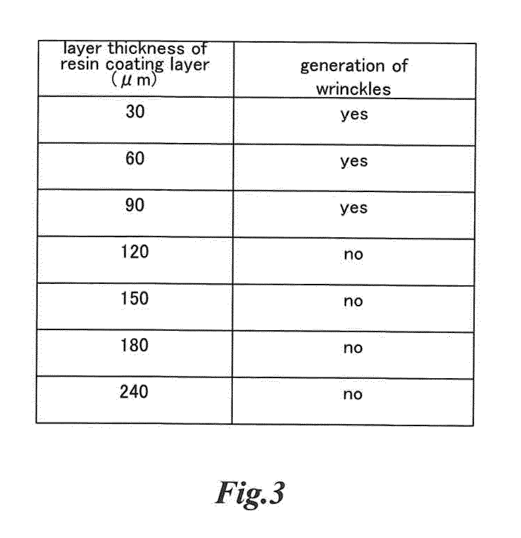

FIG. 3 indicates the results showing whether wrinkles are generated or not when the cork stopper 1A with the resin coating layer in FIG. 2 is plugged into the mouth portion of the container at various layer thicknesses of the resin coating layer. In examination of wrinkles, cork stoppers coated with the resin layers of which layer thicknesses of the resin coating layers 3 are different are prepared and are unplugged after being plugged into the mouth portion of the beverage container made of glass, then the surface of the cork stopper with the resin coating layer is visually observed and existence of wrinkles is confirmed.

For evaluating the significance, the cork stopper with the resin coating layer has a large tightening allowance to the mouth portion of the beverage container made of glass. In such a case, FIG. 3 shows that wrinkles are generated when the layer thickness "d" is smaller than 90 µm, wrinkles are not generated when the layer thickness "d" is larger than 120 µm. When the layer thickness "d" is 90 µm, one wrinkle is found. It is understood that the layer thickness "d" of 100 µm or over is effective for inhibiting wrinkles.

In the above-mentioned embodiments, the cork stopper with the resin coating layer is used for a container for whisky, brandy or wine. The container can also be used for beverages such as champagne, Japanese sake or juice. The shapes of the cork stoppers 1 and 1A with resin coating layers in FIG. 1 and FIG. 2 are examples and the embodiments of the present invention are not limited to such shapes. In the embodiment, the cork stopper has the flange portion 5.

However, the flange portion 5 may not be provided or another member can be used instead of the flange portion 5 as long as the core portion 4 constituted with the cork stopper body 2 and the resin coating layer 3 is included. In the above-mentioned embodiments, the cork stopper body 2 is constituted with a molded body formed by compression molding of cork granules and binder resin. However, the present invention is not limited to such embodiments and the cork stopper body 2 can be constituted with a molded cork body formed by another method.

The compression molding is not limited to be compressed in the diametrical direction. The compression can be in the direction along the axis L. In addition, the cork stopper 1 with the resin coating layer shown in FIG. 1 can be provided with the silicone elastomer layer 7 integrally coated on the upper portion and the lower portion of the circumferential face 2b except for the middle portion in the circumferential direction, the upper portion and the lower portion being on the outer surface of the resin coating layer 3, namely the outer surface of the resin layer 31 of polyethylene film, and being provided with a space in the axial direction L.

### List of Reference Characters

- 1: cork stopper with resin coating layer
- 1A: cork stopper with resin coating layer
- 2: cork stopper body
- 2a: upper end
- 2b: circumferential face
- 2c: lower end face
- 3: resin coating layer
- 4: core portion
- 5: flange portion
- 6: washer
- 7: silicone elastomer layer
- 8: polyethylene terephthalate resin film
- 9: urethane adhesion layer
- 20: attachment hole
- 21: large diameter portion
- 30: resin adhesion layer
- 31: resin layer
- 40: columnar portion
- 41: expanding portion
- 50: flange body
- 51: projection portion
- d: layer thickness
- L: axis

## Claims

1. A cork stopper (1, 1A) with a resin coating layer, comprising:
a columnar cork stopper body (2) constituted with a molded cork body, and the resin coating layer (3) covering an outer surface of the cork stopper body (2),
the resin coating layer (3) comprising a resin adhesion layer (30) directly adhered onto the outer surface of the cork stopper body (2), and a resin layer (31) adhered onto the outer surface of the cork stopper body (2) with the resin adhesion layer (30) interposed therebetween, and
the resin coating layer (3) on a circumferential face of the cork stopper body (2) having a layer thickness from 100 µm to 240 µm.

2. The cork stopper (1, 1A) according to claim 1,
wherein the molded cork body is formed by compression molding cork granules and binder resin, and
wherein the average grain diameter of the cork granules is from 0.5 mm to 3 mm.

3. The cork stopper (1, 1A) according to claim 2,
wherein average grain diameter of the cork granules is from 0.5 mm to 1 mm.

4. The cork stopper (1, 1A) according to any one of claims 1 to 3,
wherein the resin adhesion layer (30) is a polyethylene resin adhesion layer and the resin layer (31) is a polyethylene resin film layer.

5. The cork stopper (1A) according to any one of claims 1 to 4,
wherein the outer surface of the resin coating layer (3) is further coated with a polyethylene terephthalate resin layer (8).

6. The cork stopper (1A) according to claim 5,
wherein silicone elastomer layers (7) are coated on the outer surface of the polyethylene terephthalate resin layer (8) on the upper portion and the lower portion of a circumferential face (2b) of the cork stopper body (2).
